# DEMANDE DE BREVET EUROPEEN

(11) **EP 1 947 870 A1**
(43) Date de publication de la demande: **23.07.2008**
(21) Numéro de dépôt: 08100644.7
(22) Date de dépôt: 18.01.2008
(51) Int. Cl.: H04Q 7/22

(54) **Procédé de connexion d'un utilisateur d'un reseau de téléfonie mobile a un service de transmission de données**

(30) Priorité: 18.01.2007 FR 0752743
(71) Demandeur: Bouygues Telecom, 92100 Boulogne Billancourt (FR)
(72) Inventeur: Patin, Bruno, 78112, FOURQUEUX (FR); Keraval, Thibaut, 91319, LINAS (FR); Cayuela, David, 92120, MONTROUGE (FR); Chabernaud, Fanny, 92170, VANVES (FR)
(74) Mandataire: Callon de Lamarck, Jean-Robert

(57) **Abrégé**

L'invention concerne un procédé de connexion d'un utilisateur d'un réseau de téléphonie mobile à un service de transmission de données, dans lequel un équipement d'accès génère une requête de création de contexte d'échange de données entre un terminal mobile et une plateforme de service en remplaçant un paramètre de connexion transmis par le terminal de téléphonie mobile par un paramètre de connexion de substitution, le premier paramètre de connexion de substitution étant un paramètre de connexion associé à l'identifiant de l'abonné dans la base de données utilisateurs.

## Description

### DOMAINE DE L'INVENTION

L'invention concerne l'accès à des services de transmission de données et l'utilisation de ces services via un réseau de téléphonie mobile.

### ETAT DE LA TECHNIQUE

Les services de transmission de données sont proposés par les opérateurs de téléphonie mobile. Les utilisateurs ont la possibilité d'accéder à ces services en fonction des abonnements qu'ils ont souscrits auprès de leur opérateur.

Pour permettre à un utilisateur d'accéder aux services de transmission de données et utiliser ces services, un terminal de téléphonie mobile doit être configuré. En particulier, le terminal doit contenir des paramètres de connexion spécifiques, qui dépendent de l'opérateur et de l'utilisateur. Ces paramètres de connexion sont nécessaires pour permettre la création et l'utilisation d'un contexte d'échange de données entre le terminal et des plateformes de service dans le réseau de téléphonie mobile.

La plupart des terminaux de téléphonie mobile sont initialement configurés par les fabricants de terminaux pour les opérateurs. Plus précisément, un terminal est pré-configuré pour une offre spécifique proposée par l'opérateur.

Toutefois une part de plus en plus importante de terminaux (parfois appelés « Terminaux Universels ») ne sont pas pré-configurés par le fabricant. Ce type de terminal doit être configuré par l'opérateur ou par l'utilisateur lui-même.

Par exemple, pour accéder à des services de transmission de données GPRS (General Packet Radio Service) ou UMTS (Universal Mobile Telecommunication System), les terminaux de téléphonie mobile doivent être configurés pour contenir les paramètres de connexion suivants :
- un paramètre APN (Access Point Name) identifiant un point d'accès du réseau,
- un paramètre VIP (Virtual IP address) identifiant une plateforme de service de l'opérateur,
- un paramètre de port TCP (Transmission Control Protocol) ou UDP (User Datagram Protocol) qui, par convention, dépend du service requis,
- une adresse URL (Uniform Resource Locator) de connexion, qui désigne une ressource à laquelle le terminal mobile doit être connecté, à l'établissement de la connexion.

Le paramètre APN est spécifique à l'opérateur de téléphonie mobile. Ce paramètre dépend des services inclus dans l'abonnement souscrit pas l'utilisateur.

Les paramètres VIP, port et URL dépendent du service requis par l'utilisateur.

L'opération de configuration peut être réalisée manuellement sur tous les terminaux (en choisissant les options appropriées dans le menu du terminal et en saisissant les paramètres requis) ou à distance sur certains terminaux spécifiques compatibles OTA (Over The Air). Dans tous les cas, cette opération de configuration est différente d'un terminal à l'autre et relativement complexe à réaliser pour un utilisateur.

En outre, dans le cas où le terminal n'est pas correctement configuré, l'utilisateur ne pourra pas accéder aux services de transmission de données auxquels il a souscrit.

Cette situation se présente en particulier dans le cas où l'utilisateur a inséré sa carte SIM dans un terminal qui était initialement configuré pour un autre opérateur ou un utilisateur ayant souscrit à une offre différente. Dans ce cas, en effet, les paramètres de connexion enregistrés dans le terminal ne correspondent pas nécessairement aux services auxquels l'utilisateur a souscrit. Ainsi l'utilisateur reçoit un message d'échec à chaque tentative de connexion aux services de transmission de données.

Le document WO 2005/076690 A2 décrit un procédé de configuration d'un terminal mobile selon lequel le terminal mobile envoie à un portail d'aide une requête de configuration en utilisant des paramètres APN et URL prédéfinis. Le portail d'aide authentifie le terminal et transmet une requête à un serveur de provisionnement qui configure le terminal.

Un tel procédé permet une configuration à distance du terminal mais nécessite des opérations spécifiques de la part de l'utilisateur.

Le document US 2004/0153548 A1 décrit un procédé de reconfiguration dynamique d'un terminal mobile, le procédé étant automatiquement déclenché lorsqu'un événement donné se produit ou une condition donnée est remplie.

Ce procédé nécessite que le terminal mobile soit spécifiquement programmé pour réaliser les différentes étapes de reconfiguration.

Le document WO 2006/077555 A1 décrit un procédé de connexion à un service de transmission de données selon lequel un serveur de passerelle transmet à un serveur d'authentification, d'autorisation et de comptabilisation (serveur AAA) une requête d'accès, la requête d'accès incluant un paramètre APN et un paramètre d'identité du terminal mobile. Le serveur AAA détermine si le terminal mobile est autorisé à accéder au service avec le paramètre APN de la requête d'accès et si ce n'est pas le cas, le serveur de passerelle sélectionne un paramètre APN de substitution dans une liste de paramètres APN.

Le document WO 2005/071982 A1 décrit un procédé de connexion à un service GPRS (General Packet Radio Services) selon lequel le noeud SGSN (Serving GPRS Support Node) détermine si la requête de connexion du terminal mobile contient un paramètre APN. Si ce n'est pas le cas ou si le paramètre APN est erroné, le SGSN détermine un APN de substitution.

Le paramètre APN de substitution permet au terminal mobile d'accéder au service de transmission de données, même si le terminal mobile n'est pas correctement configuré à cet effet.

Un tel procédé permet un accès transparent au service de transmission de données, sans nécessiter une reconfiguration du terminal mobile.

Ce procédé permet de réduire les échecs de connexion dus à une configuration erronée du terminal mobile.

Toutefois, dans ces procédés, le paramètre APN de substitution est un paramètre APN générique, qui ne prend pas en compte le profil de l'utilisateur. Plus précisément, ce paramètre ne correspond pas nécessairement aux services qui ont été souscrits par l'utilisateur avec son abonnement.

Par ailleurs, avec de tels procédés, il existe un risque que des utilisateurs frauduleux puissent accéder à des services de transmission de données, grâce à un paramètre APN de substitution, sans avoir acquitter au préalable des droits d'accès à ces services.

### RESUME DE L'INVENTION

Un but de l'invention est de permettre à l'utilisateur d'accéder à des services de transmission de données auxquels il a souscrit, même si le terminal mobile qu'il utilise n'est pas configuré à cet effet.

Ce problème est résolu dans le cadre de la présente invention grâce à un procédé de connexion d'un utilisateur d'un réseau de téléphonie mobile à un service de transmission de données, comprenant des étapes selon lesquelles :
- un terminal de téléphonie mobile transmet à un premier équipement d'accès à un réseau de transmission de données, une requête de connexion au service, la requête de connexion incluant au moins un identifiant de l'utilisateur et un premier paramètre de connexion,
- le premier équipement d'accès vérifie que l'identifiant est présent dans une base de données utilisateurs contenant des identifiants d'utilisateurs du réseau et des paramètres de connexion et dans laquelle certains identifiants d'utilisateur sont associés au moins un paramètre de connexion,
- le premier équipement d'accès génère une requête de création de contexte d'échange de données entre le terminal mobile et une plateforme de service en remplaçant le premier paramètre de connexion transmis par le terminal de téléphonie mobile par un premier paramètre de connexion de substitution, le premier paramètre de connexion de substitution étant un paramètre de connexion associé à l'identifiant de l'abonné dans la base de données utilisateurs.

L'étape de vérification de l'identifiant de l'utilisateur permet de rechercher un paramètre de configuration en fonction du profil de l'utilisateur. Ainsi, l'utilisateur peut avoir accès à des services personnalisés, de manière transparente.

Le procédé peut en outre comprendre une étape selon laquelle, dans le cas où aucun paramètre de connexion n'est associé à l'identifiant recherché, l'équipement d'accès transmet au terminal mobile un message d'échec de la connexion.

Dans une mise en oeuvre de l'invention, le premier paramètre de connexion est un paramètre APN.

Le procédé peut en outre comprendre des étapes selon lesquelles :
- le terminal mobile transmet à un deuxième équipement d'accès une requête de trafic data contenant un deuxième paramètre de connexion spécifique au service de transmission de données,
- le deuxième équipement d'accès convertit le deuxième paramètre en un paramètre corrigé,
- le deuxième équipement d'accès transmet une requête de trafic data vers un serveur passerelle associé au paramètre corrigé.

Dans une mise en oeuvre de l'invention, le deuxième équipement interroge une table de correspondance contenant des paramètres corrigés pour convertir le deuxième paramètre.

Dans une mise en oeuvre de l'invention, le deuxième paramètre est un paramètre d'adresse VIP désignant un serveur passerelle.

Dans une mise en oeuvre de l'invention, l'étape de conversion prend en compte un paramètre indicatif de la nature d'un flux de données à échanger.

Dans une mise en oeuvre de l'invention, le paramètre indicatif de la nature d'un flux de données à échanger est un paramètre de port.

Le procédé peut en outre comprendre des étapes selon lesquelles :
- le serveur passerelle contrôle un troisième paramètre d'adresse désignant une ressource vers laquelle doit être établie la connexion, le troisième paramètre étant contenu dans la requête de connexion,
- le serveur passerelle convertit le troisième paramètre d'adresse en un paramètre d'adresse de substitution,
- le serveur passerelle transmet une requête de connexion vers l'adresse de substitution.

Dans une mise en oeuvre de l'invention, lors de l'étape de contrôle, le serveur passerelle détermine si le paramètre d'adresse est présent parmi une liste de paramètres d'adresses prédéterminés.

Le procédé peut en outre comprendre une étape selon laquelle, si le troisième paramètre d'adresse est présent dans la liste de paramètres d'adresses, le serveur passerelle recherche dans une table de correspondance un paramètre d'adresse de substitution.

L'invention se rapporte également à un équipement d'accès pour connecter un utilisateur d'un réseau de téléphonie mobile à un service de transmission de données, l'équipement étant programmé pour :
- recevoir une requête de connexion au service émise par un terminal mobile, la requête de connexion incluant au moins un identifiant de l'utilisateur et un premier paramètre de connexion,
- vérifier que l'identifiant est présent dans une base de données utilisateurs contenant des identifiants d'utilisateurs du réseau et des paramètres de connexion et dans laquelle certains identifiants d'utilisateur sont associés au moins un paramètre de connexion,
- générer une requête de création de contexte d'échange de données entre le terminal mobile et une plateforme de service en remplaçant le premier paramètre de connexion transmis par le terminal de téléphonie mobile par un premier paramètre de connexion de substitution, le premier paramètre de connexion de substitution étant un paramètre de connexion associé à l'identifiant de l'abonné dans la base de données utilisateurs.

### PRESENTATION DES FIGURES

D'autres caractéristiques et avantages ressortiront encore de la description qui suit, laquelle est purement illustrative et non limitative et doit être lue en regard des dessins annexés, parmi lesquels :
- la figure 1 représente de manière schématique des équipements d'accès à des services de transmission de données GPRS d'un réseau de téléphonie mobile,
- la figure 2 représente de manière schématique les étapes d'une première phase d'un procédé de connexion à un service de transmission de données GPRS, conforme à un mode de mise en oeuvre possible de l'invention,
- la figure 3 représente de manière schématique les étapes d'une deuxième phase du procédé,
- la figure 4 représente de manière schématique les étapes d'une troisième phase du procédé

### DESCRIPTION DETAILLEE D'UN MODE DE REALISATION

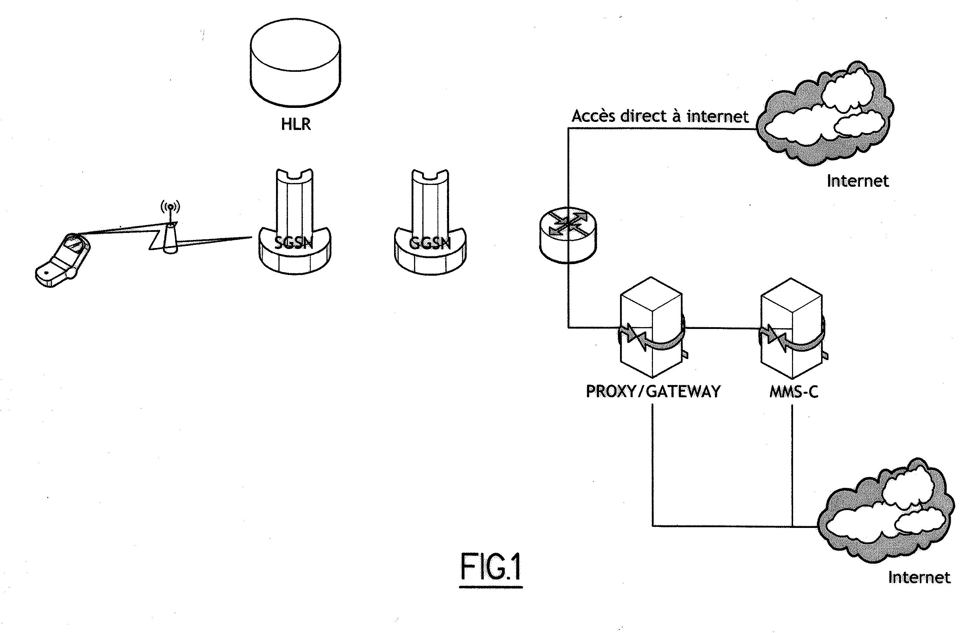

Sur la figure 1, le réseau de téléphonie mobile comprend un serveur SGSN (Serving GPRS Support Node), un registre HLR (Home Location Register), un serveur GGSN (Gateway GPRS Support Node), une plateforme de connexion à un réseau Internet et à un serveur proxy/gateway de service, un ou plusieurs serveurs proxy/gateway et un serveur MMS-C (MultiMedia Messaging Service Center).

Le serveur SGSN est un serveur qui gère des abonnés ayant accès à des services GPRS dans une cellule donnée du réseau de téléphonie mobile. Le serveur SGSN est l'équipement auprès duquel un terminal mobile se rattache et s'enregistre. Le serveur SGSN est apte à renvoyer une adresse IP au terminal mobile et à router les données échangées entre le terminal mobile et le service GPRS (notamment vers un serveur GGSN).

Le serveur GGSN est un serveur passerelle permettant d'acheminer des données entre le réseau de téléphonie mobile (GPRS / UMTS) et un autre réseau.

Le registre HLR est une base de données qui contient des informations nécessaires à une gestion des abonnés du réseau de téléphonie mobile. Ce registre contient notamment des informations identifiant les abonnés, des informations relatives à leur localisation ainsi que des informations relatives aux services souscrits par les abonnés.

Un serveur proxy/gateway est typiquement un serveur de passerelle transparent ou WAP ou IMode.

Chaque serveur proxy/gateway est apte à fournir un service de transmission de données, tel que par exemple un service de navigation Internet, Imode ou WAP, ou un service d'envoi et de réception de messages MMS.

Le serveur MMS-C est une centrale téléphonique chargée de contrôler que les appels de type MMS (incluant un contenu multimédia, tels qu'une photo ou une vidéo) peuvent être réceptionnés et traités par les terminaux mobiles destinataires.

Lorsqu'un terminal mobile transmet au réseau de téléphonie mobile une requête de connexion à un service de transmission de données, une procédure de connexion est déclenchée. Cette procédure comprend plusieurs phases, chaque phase faisant intervenir des équipements spécifiques du réseau.

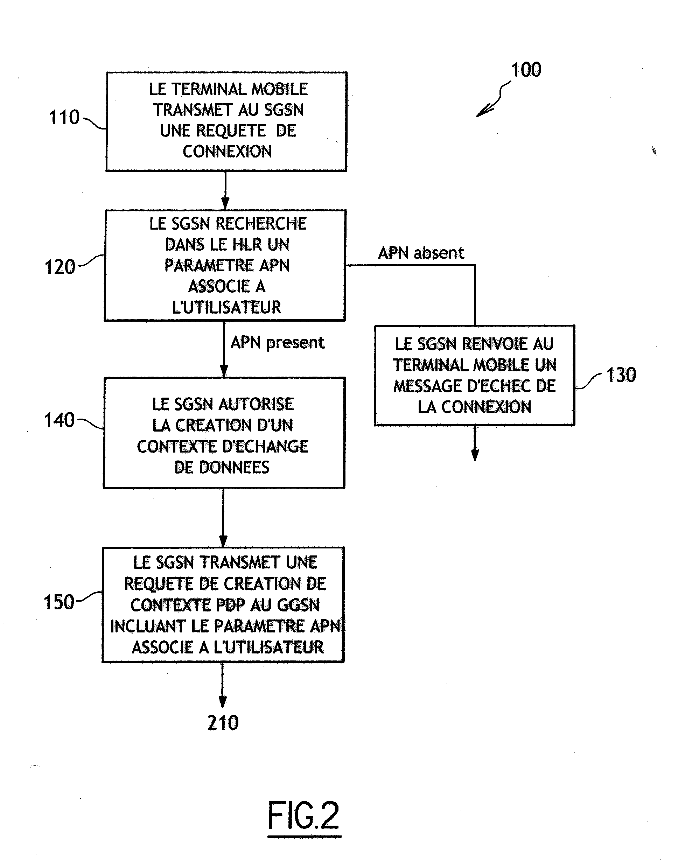

La figure 2 illustre une première phase 100 d'un procédé de connexion.

Selon une première étape 110, le terminal mobile transmet une requête de connexion au serveur SGSN. La requête de connexion contient d'une part un paramètre identifiant l'utilisateur et d'autre part un paramètre de connexion nécessaire pour établir un accès au service de transmission de données.

Le paramètre identifiant l'utilisateur est par exemple le numéro IMSI (International Mobile Subscriber Identity) de l'utilisateur.

Le paramètre de connexion est notamment un paramètre APN (Access Point Name) identifiant un point d'accès du réseau. Les paramètres APN sont spécifiques aux opérateurs de téléphonie mobile.

Selon une deuxième étape 120, le serveur SGSN contrôle le paramètre APN associé à la requête.

A cet effet, le serveur SGSN interroge le registre HLR qui contient des identifiants d'utilisateurs du réseau et des paramètres APN, chaque identifiant étant associé à un ou plusieurs paramètres APN, en fonction de l'abonnement souscrit par l'utilisateur.

Le serveur SGSN recherche dans le registre HLR, le numéro IMSI de l'utilisateur et détermine si au moins un paramètre APN est associé au numéro IMSI.

Si aucun paramètre APN n'est présent dans le registre HLR, cela signifie que l'utilisateur n'a pas souscrit à des services de transmission de données. Dans ce cas, selon une troisième étape 130, le serveur SGSN renvoie au terminal mobile un message d'échec indiquant que la connexion est impossible.

Si un paramètre APN associé à l'utilisateur est présent dans le registre HLR, selon une quatrième étape 140, le serveur SGSN autorise une création d'un contexte d'échange de données. Le serveur SGSN transmet au terminal mobile un message d'acceptation de la connexion.

Selon une cinquième étape 150, le serveur SGSN transmet au serveur GGSN une requête de création d'un contexte PDP (Packet Data Protocol) d'échange de données.

Le serveur SGSN génère la requête de création de contexte en utilisant le paramètre APN associé à l'utilisateur dans le registre HLR.

Autrement dit, le serveur SGSN a remplacé le paramètre APN initialement transmis par le terminal mobile par un paramètre APN de substitution, qui est le paramètre APN associé à l'utilisateur dans le registre HLR.

La première phase 100 permet à l'utilisateur de déclencher une procédure d'accès au service de transmission de données, même si le paramètre APN enregistré dans son terminal mobile est erroné.

Du fait que le serveur SGSN réalise une substitution du paramètre APN, aucune reconfiguration du terminal mobile n'est nécessaire.

En outre, l'APN de substitution est déterminé en fonction de l'identité de l'utilisateur. Ainsi, l'utilisateur peut accéder à un ensemble personnalisé de services de transmission de données, cet ensemble étant dépendant de l'abonnement auquel il a souscrit.

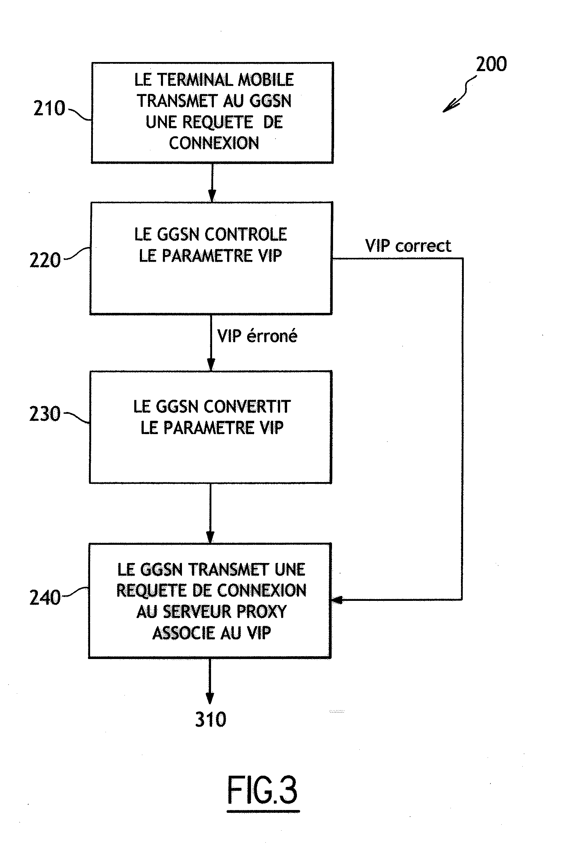

La figure 3 illustre une deuxième phase 200 du procédé de connexion.

Le terminal mobile reçoit le message d'acceptation de la connexion émis par le serveur SGSN.

Selon une première étape 210, le terminal mobile transmet au GGSN une requête de trafic data contenant des paramètres de connexion spécifiques au service de transmission de données requis. Ces paramètres incluent des paramètres VIP, port et URL pré-enregistrés dans le terminal mobile.

Selon une deuxième étape 220, le serveur GGSN contrôle le paramètre VIP. Le paramètre VIP est spécifique à chaque opérateur de téléphonie mobile. Le serveur GGSN détermine si le paramètre VIP est correct (c'est-à-dire qu'il est accessible par le GGSN de l'opérateur avec l'offre de services à laquelle l'utilisateur a souscrit).

A cet effet, le serveur GGSN peut réaliser une opération d'essai de connexion vers un serveur proxy/gateway associé au paramètre VIP.

Si le serveur GGSN détermine que le paramètre VIP est correct, alors le serveur GGSN exécute directement une quatrième étape 240 en transmettant une requête de connexion au serveur proxy/gateway associé à l'adresse VIP.

Si le serveur GGSN détermine que le paramètre VIP est erroné (c'est à dire que le serveur GGSN est incapable ou n'a pas l'autorisation de contacter l'adresse VIP), alors le serveur GGSN exécute une troisième étape 230, selon laquelle il convertit le paramètre VIP en un paramètre VIP corrigé.

La conversion peut prendre en compte le paramètre de port (qui est indépendant de l'opérateur). En effet, ce paramètre fournit une indication sur le type de flux de données qui doit être établi.

A cet effet, le serveur GGSN se réfère à une table de correspondance et réalise une opération de conversion NAT (Network Address Translation) vers le paramètre VIP corrigé.

Selon une quatrième étape 240, le serveur GGSN transmet une requête de trafic data au serveur proxy/gateway associé au paramètre VIP corrigé.

La deuxième phase 200 permet d'établir une connexion avec un serveur proxy/gateway de l'opérateur, même si le terminal mobile n'est pas correctement paramétré à cet effet.

C'est le cas, par exemple, lorsque le terminal mobile est configuré avec un paramètre VIP désignant un serveur proxy/gateway d'un autre opérateur de téléphonie mobile que celui auprès duquel l'utilisateur a souscrit un abonnement.

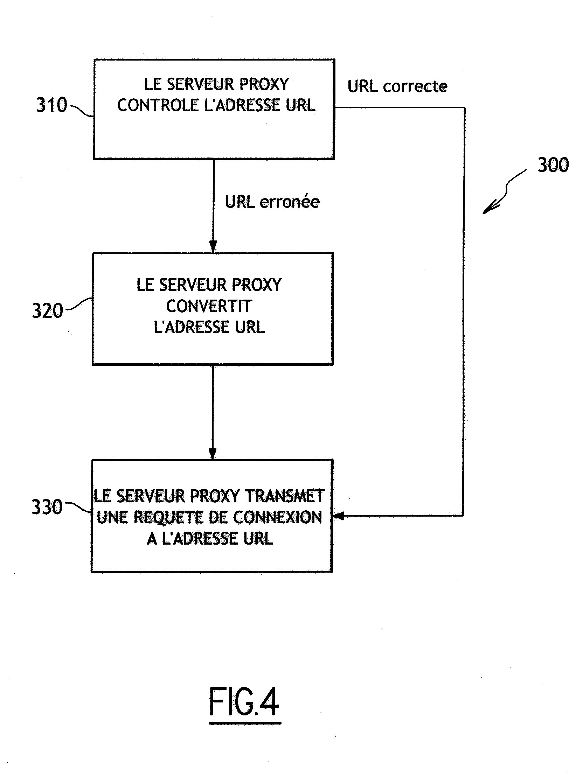

La figure 4 illustre une troisième phase 300 du procédé de connexion.

Selon une première étape 310, le serveur proxy/gateway contrôle l'adresse URL recherchée.

L'adresse URL est une adresse URL « par défaut » pré-enregistrée dans le terminal mobile. L'adresse URL désigne une ressource à laquelle le terminal mobile doit être connecté lors de l'établissement de la connexion. Toutefois, l'utilisateur peut, après l'établissement de la connexion, spécifier d'autres adresses URL en vue de connecter le terminal mobile à d'autres ressources.

Le serveur proxy/gateway détermine si l'adresse URL « par défaut » transmise par le terminal mobile est présente parmi une liste d'adresses URL prédéterminées.

Cette liste contient des adresses URL désignant des ressources fournies par des opérateurs de téléphonie mobile différents de l'opérateur auprès duquel l'utilisateur a souscrit un abonnement.

Si l'adresse URL n'est pas présente dans la liste d'adresses URL prédéterminées, le serveur proxy/gateway passe directement à l'étape 330 et établit une connexion entre le terminal mobile et l'adresse URL recherchée.

Si l'adresse URL recherchée est présente dans la liste d'adresses URL prédéterminées, selon une deuxième étape 320, le serveur proxy/gateway convertit l'adresse URL en une adresse URL de substitution. A cet effet, le serveur proxy/gateway recherche dans une table de correspondance une adresse URL de substitution.

Selon une troisième étape 330, le serveur proxy/gateway établit une connexion vers l'adresse URL de substitution.

Cette troisième phase 300 permet de filtrer les adresses URL et rediriger les requêtes de connexion vers des adresses URL admises par l'opérateur de téléphonie mobile (par exemple vers une adresse URL correspondant au portail d'accès de l'opérateur.)

## Revendications

1. Procédé de connexion d'un utilisateur d'un réseau de téléphonie mobile à un service de transmission de données, comprenant des étapes selon lesquelles :
- (110) un terminal de téléphonie mobile transmet à un premier équipement d'accès à un réseau de transmission de données, une requête de connexion au service, la requête de connexion incluant au moins un identifiant de l'utilisateur et un premier paramètre de connexion,
- (120) le premier équipement d'accès vérifie que l'identifiant est présent dans une base de données utilisateurs contenant des identifiants d'utilisateurs du réseau et des paramètres de connexion et dans laquelle certains identifiants d'utilisateur sont associés au moins un paramètre de connexion,
- (150) le premier équipement d'accès génère une requête de création de contexte d'échange de données entre le terminal mobile et une plateforme de service en remplaçant le premier paramètre de connexion transmis par le terminal de téléphonie mobile par un premier paramètre de connexion de substitution, le premier paramètre de connexion de substitution étant un paramètre de connexion associé à l'identifiant de l'abonné dans la base de données utilisateurs.

2. Procédé selon la revendication 1, comprenant une étape (130) selon laquelle, dans le cas où aucun paramètre de connexion n'est associé à l'identifiant recherché, l'équipement d'accès transmet au terminal mobile un message d'échec de la connexion.

3. Procédé selon l'une des revendications qui précèdent, dans lequel le premier paramètre de connexion est un paramètre APN.

4. Procédé selon l'une des revendications qui précèdent, comprenant des étapes selon lesquelles :
- (210) le terminal mobile transmet à un deuxième équipement d'accès une requête de trafic data contenant un deuxième paramètre de connexion spécifique au service de transmission de données,
- (230) le deuxième équipement d'accès convertit le deuxième paramètre en un paramètre corrigé,
- (240) le deuxième équipement d'accès transmet une requête de trafic data vers un serveur passerelle associé au paramètre corrigé.

5. Procédé selon la revendication 4, dans lequel le deuxième équipement interroge une table de correspondance contenant des paramètres corrigés pour convertir le deuxième paramètre.

6. Procédé selon l'une des revendications 4 ou 5, dans lequel le deuxième paramètre est un paramètre d'adresse VIP désignant un serveur passerelle.

7. Procédé selon l'une des revendications 4 à 6, dans lequel l'étape de conversion (230) prend en compte un paramètre indicatif de la nature d'un flux de données à échanger.

8. Procédé selon la revendication 7, dans lequel le paramètre indicatif de la nature d'un flux de données à échanger est un paramètre de port.

9. Procédé selon l'une des revendications 4 à 8, comprenant des étapes selon lesquelles :
- (310) le serveur passerelle contrôle un troisième paramètre d'adresse désignant une ressource vers laquelle doit être établie la connexion, le troisième paramètre étant contenu dans la requête de connexion,
- (320) le serveur passerelle convertit le troisième paramètre d'adresse en un paramètre d'adresse de substitution,
- (330) le serveur passerelle transmet une requête de connexion vers l'adresse de substitution.

10. Procédé selon la revendication 9, lors de l'étape (310) de contrôle, le serveur passerelle détermine si le paramètre d'adresse est présent parmi une liste de paramètres d'adresses prédéterminés.

11. Procédé selon la revendication 10, dans lequel, si le troisième paramètre d'adresse est présent dans la liste de paramètres d'adresses, le serveur passerelle recherche dans une table de correspondance un paramètre d'adresse de substitution.

12. Equipement d'accès pour connecter un utilisateur d'un réseau de téléphonie mobile à un service de transmission de données, l'équipement étant programmé pour :
- (110) recevoir une requête de connexion au service émise par un terminal mobile, la requête de connexion incluant au moins un identifiant de l'utilisateur et un premier paramètre de connexion,
- (120) vérifier que l'identifiant est présent dans une base de données utilisateurs contenant des identifiants d'utilisateurs du réseau et des paramètres de connexion et dans laquelle certains identifiants d'utilisateur sont associés au moins un paramètre de connexion,
- (150) générer une requête de création de contexte d'échange de données entre le terminal mobile et une plateforme de service en remplaçant le premier paramètre de connexion transmis par le terminal de téléphonie mobile par un premier paramètre de connexion de substitution, le premier paramètre de connexion de substitution étant un paramètre de connexion associé à l'identifiant de l'abonné dans la base de données utilisateurs.
